## Europäisches Patentamt
## European Patent Office
## Office européen des brevets

(19)

(11) Numéro de publication: **0 209 448 B1**

(12)

# FASCICULE DE BREVET EUROPEEN

(45) Date de publication du fascicule du brevet:
31.01.90

(51) Int. Cl.⁴: **C 01 F 17/00**

(21) Numéro de dépôt: 86401506.0

(22) Date de dépôt: 07.07.86

(54) Procédé de préparation de précurseurs de dérivés oxygénés de terres rares et produits obtenus.

(30) Priorité: 11.07.85 FR 8510615

(43) Date de publication de la demande:
21.01.87 Bulletin 87/4

(45) Mention de la délivrance du brevet:
31.01.90 Bulletin 90/5

(84) Etats contractants désignés:
AT CH DE FR GB IT LI SE

(73) Titulaire: RHONE-POULENC CHIMIE, 25, quai Paul Doumer, F-92408 Courbevoie Cédex (FR)

(72) Inventeur: Magnier, Claude, 3, rue des Chaufourniers, F-75019 Paris (FR)
Inventeur: Gourlaouen, Claire, 188, rue Lafayette, F-75010 Paris (FR)
Inventeur: Le Loarer, Jean-Luc, 24, rue du Général Guillaumat, F-17000 La Rochelle (FR)
Inventeur: Latourrette, Bertrand, 21, Allée Clémencet, F-93340 Le Raincy (FR)

(74) Mandataire: Dubruc, Philippe et al, RHONE-POULENC INTERSERVICES Service Brevets Chimie 25, quai Paul-Doumer, F-92408 Courbevoie Cédex (FR)

(56) Documents cités:
JP-A-59 213 620

CHEMICAL ABSTRACTS, vol. 102, no. 18, mai 1985, page 125, résumé no. 151527c, Columbus, Ohio, US; & JP-A-59 213 620 (ASAHI CHEMICAL INDUSTRY CO. LTD.) 03-12-1984
CHEMICAL ABSTRACTS, vol. 103, no. 4, juillet 1985, page 110, résumé no. 24447x, Columbus, Ohio, US; & DD-A-215 917 (VEB STICKSTOFFWERK PIESTERITZ) 21-11-1984
CHEMICAL ABSTRACTS, vol. 74, 1971, page 470, résumé no. 60296p, Columbus, Ohio, US; N.V. MZAREULISHVILI et al.: "Formation of the hydroxide and basic salts of neodymium", & ISSLED. OBL. KHIM.

(56) Documents cités: (suite)
KOMPLEKS. PROSTYKH SOEDIN. NEKOT. PEREKHODNYKH REDK. METAL. 1970, 159-69
CHEMICAL ABSTRACTS, vol. 74, no. 8, février 1971, page 470, résumé no. 37837g, Columbus, Ohio, US; N.N. MIRONOV et al.: "Formation of neodymium hydroxides", & ZH. NEORG. KHIM. 1970, 15(11), 2914-17

Le dossier contient des informations techniques présentées postérieurement au dépôt de la demande et ne figurant pas dans le présent fascicule.

**Description**

La présente invention a pour objet un nouveau procédé d'obtention de précurseurs de dérivés oxygénés de terres rares et les produits obtenus selon ledit procédé. Plus précisément, elle concerne un procédé de préparation de sels basiques de terres rares. L'invention vise également l'obtention d'oxydes de terres rares à partir desdits sels.

Les oxydes de terres rares sont généralement préparés par calcination de leurs oxalates, carbonates ou hydroxydes.

Dans ce dernier cas, la préparation des hydroxydes de terres rares pose un problème très important industriellement qui se situe au niveau de l'étape de filtration.

En effet il est connu selon le nouveau traité de Chimie Minérale de Pascal VII p. 796 que les précipités d'hydroxydes de terres rares qui sont préparés par réaction d'un sel de terres rares et d'un excès de base, se présentent sous la forme d'un précipité gélatineux difficilement filtrable.

Pour pallier cet inconvénient, la demanderesse a trouvé un procédé qui permet d'obtenir non pas des hydroxydes de terres rares mais des sels basiques de terres rares à caractéristiques morphologiques bien définies.

Le procédé d'obtention de précurseurs de dérivés oxygénés de terres rares selon l'invention est caractérisé par le fait qu'il consiste:

— à mélanger simultanément et en continu une solution aqueuse d'au moins un sel de terre rare trivalente avec une base dans des conditions telles que le rapport molaire entre la concentration en ions OH de la base et la concentration en sel de terre rare exprimée en cation terre rare soit constant et inférieur à 5,

— à séparer le précipité obtenu

— et éventuellement à le traiter thermiquement.

Dans la première étape du procédé, on effectue le mélange de la solution aqueuse d'un sel d'une terre rare trivalente et de la base.

La solution aqueuse du sel d'une terre rare trivalente doit être soluble dans les conditions de l'invention.

Parmi les sels convenant bien à l'invention, on peut citer les nitrates de terres rares, les sels doubles de nitrates de terres rares et d'ammonium ou les chlorures de terres rares telles que l'yttrium ou le lanthane, cérium, praséodyme, néodyme, samarium, europium, gadolinium, terbium, dysprosium, holmium, erbium, thulium, ytterbium, lutécium.

On peut mettre en œuvre une solution contenant une ou plusieurs terres rares: en particulier, on peut faire appel à une solution de sels de terres rares qui proviendrait directement ou indirectement du traitement des minerais de terres rares.

La pureté du ou des sels de terres rares utilisés est choisie en fonction des exigences de l'application visée.

La concentration de la solution d'un ou des sels de terres rares mise en œuvre selon le procédé de l'invention n'est pas un facteur critique et peut varier dans de larges limites: elle est toutefois comprise entre 0,1 et 2 moles par litre et est choisie, de préférence, entre 0,3 et 1,5 moles.

L'acidité de ladite solution n'est pas critique selon l'invention.

La base utilisée dans le procédé de l'invention est mise en œuvre généralement sous la forme d'une solution aqueuse. On peut faire appel à une solution aqueuse de bases telles que l'ammoniaque, la soude, la potasse, le carbamate d'ammonium, l'urée, l'hexaméthylènetétramine etc....

On peut également employer l'ammoniac gazeux.

Selon l'invention, on met en œuvre de préférence une solution d'ammoniaque.

La normalité de la solution basique mise en jeu n'est pas un facteur critique selon l'invention: elle peut varier dans de larges limites, par exemple, entre 0,1 et 11 N mais il est préférable d'avoir recours à des solutions dont la concentration varie entre 2 et 11 N.

La proportion entre la solution basique et la solution d'au moins un sel de terre rare trivalente doit être telle que le rapport molaire $[OH^-]/[TR^{3+}]$ est supérieur à 0,2 et inférieur à 5. Mais pour obtenir de bons rendements de précipitation, il est préférable que ledit rapport soit supérieur ou égal à 2 et inférieur à 5.

On réalise le mélange des réactifs simultané, sous agitation de la solution aqueuse d'au moins un sel de terre rare trivalente et de la solution basique.

Les débits d'addition des solutions de réactifs sont ajustés de telle sorte que l'on obtienne le rapport $[OH^-]/[TR^{3+}]$ précédemment défini.

Il est également possible de contrôler les débits en effectuant une régulation du pH qui varie le plus souvent entre 6,5 et 9,5: ledit pH dépend de la nature du sel de terre rare et de l'agitation.

La température du milieu réactionnel est choisie entre environ 10 et environ 50°C et plus particulièrement entre 10 et 30°C. La borne supérieure présente un caractère critique en terme de productivité car lorsqu'on travaille à une température supérieure à 50°C, on note que la filtrabilité du précipité obtenu est moins bonne.

Le temps de séjour du mélange dans le milieu réactionnel peut varier entre 1 minute et plusieurs heures, par exemple 48 heures ou plus: la borne supérieure ne présente aucun caractère critique: toutefois un temps allant de 5 minutes à 30 minutes est généralement satisfaisant.

Les conditions d'agitation doivent être relativement énergiques. La vitesse d'agitation dépend du type d'agitateur et du rapport du diamètre de l'agitateur et du réacteur. A titre d'exemple, on fixe la vitesse pour un agitateur quadripale qui passe très près des parois d'un réacteur de 15 cm de diamètre (volume utile = 750 cm$^3$) entre 200 et 1000 tours/minute mais on le choisit de préférence entre 300 et 400 tours/minute.

La deuxième étape du procédé consiste à séparer le précipité obtenu qui est en suspension dans la masse réactionnelle et se trouve dans certaines conditions sous forme de microbilles.

Le précipité peut être séparé du milieu réactionnel par les techniques courantes de séparation liquide-solide notamment la décantation ou la filtration qui est conduite d'une manière aisée. Cette séparation est effectuée généralement à température ambiante, le plus souvent 15 à 25°C.

On peut éventuellement soumettre le précipité décanté ou le gâteau de filtration à un lavage afin d'éliminer les anions adsorbés sur le précipité.

Le lavage est opéré à l'eau de préférence distillée ou permutée dont la température peut varier indifféremment entre 5°C et 90°C. On effectue de un à plusieurs lavages et le plus souvent de un à trois lavages.

Le lavage peut être également réalisé à l'aide d'un solvant organique. On peut faire appel aux hydrocarbures aliphatiques, cycloaliphatiques ou aromatiques ou à des alcools aliphatiques ou cycloaliphatiques tels que le méthanol, l'éthanol, le n-propanol, l'isopropanol, le n-butanol, l'isobutanol, le néobutanol.

On effectue de un à plusieurs lavages et le plus souvent de un à trois lavages.

Après ce lavage, la teneur en eau du gâteau est comprise entre 20 et 80% et généralement entre 20 et 50%.

Le précipité obtenu après séparation et d'éventuels lavages est ensuite soumis à un éventuel traitement thermique. On peut effectuer un séchage qui peut être réalisé à l'air ou sous pression réduite de l'ordre de $10^{-2}$ à 100 mm de mercure (1,33 à 1,33 · $10^4$ Pa).

La température de séchage peut varier entre la température ambiante et 200°C.

La durée du séchage est fonction de la température: elle n'est pas critique et peut être comprise entre 30 minutes et 48 heures mais est choisie de préférence entre 2 heures et 8 heures.

Le procédé de l'invention peut être mis en œuvre dans un appareillage classique. L'étape de mélange des solutions de réactifs s'effectue dans un réacteur équipé d'un dispositif de chauffage assuré, par exemple, par circulation d'eau chaude dans la double-enveloppe du réacteur ou à l'aide d'échangeurs thermiques (serpentins). Le réacteur doit aussi être muni des dispositifs usuels de contrôle de la température (thermomètre) et d'agitation (agitation à pâles, à encre, à hélice ou turbine) ainsi que d'un dispositif d'introduction d'un ou de deux des réactifs sous forme d'une solution aqueuse, par exemple une pompe doseuse.

Les dispositifs qui peuvent être utilisés pour effectuer les opérations de séparation et séchage ne requièrent aucune caractéristique particulière.

La filtration de la suspension obtenue peut être réalisée sur un filtre sous pression de gaz inerte tel que l'azote, sur un filtre sous pression réduite (Büchner, Nutche) ou bien sur un dispositif continu de filtration, par exemple, un filtre rotatif type Vernay ou un filtre à bande.

Le précipité est placé dans des nacelles en silice, porcelaine ou alumine puis soumis à l'opération de séchage qui peut être réalisée dans un dispositif quelconque de séchage, par exemple, dans une étuve ventilée ou maintenue sous pression réduite ou dans un dessicateur le plus souvent sous pression réduite assurée par la trompe à eau.

Conformément au procédé de l'invention, on obtient un précurseur d'un dérivé oxygéné de terre rare qui se filtre toujours aisément et qui est sous la forme d'un hydroxyde de terre rare dont une parti des groupements hydroxyle sont substitués partiellement par l'anion apporté par le sel de terre rare.

L'aspect morphologique du produit de l'invention est mis en évidence par un examen au microscope électronique à balayage qui révèle la présence d'agglomérats dont les dimensions s'échelonnent entre 2 et 100 μm.

On remarque l'existence de microbilles particulièrement bien rondes lorsque le rapport molaire $[OH^-]/[TR^{3+}]$ est supérieur ou égal à 1 et inférieur ou égal à 3. Dans ce cas, le diamètre moyen des microbilles varie entre 50 et 60 μm. On définit le diamètre moyen comme étant un diamètre tel que 50% en poids des microbilles ont un diamètre supérieur ou inférieur au diamètre moyen.

Le précurseur obtenu selon l'invention peut servir d'intermédiaires à la fabrication notamment d'oxydes ou de carbonates de terres rares.

Une applications particulière du précurseur de dérivé oxygéné de l'invention réside dans la préparation d'un oxyde de terre rare par calcination du précurseur éventuellement séché.

L'opération de calcination est effectuée à une température comprise entre environ 650 et environ 1300°C.

La durée de calcination n'est pas critique et est choisie la plus souvent entre 1 et 4 heures.

On obtient un oxyde de terre rare qui se présente comme son précurseur, sous la forme de microbilles. La taille des microbilles varie généralement entre 2 et 50 μm.

Pour permettre de mieux illustrer la mise en œuvre de l'invention, on donne ci-après différents exemples, bien entendu, non limitatifs.

Avant de détailler lesdits exemples, on va décrire le test de filtrabilité qui permet d'apprécier les qualités de filtration du précipité obtenu.

Dans le test, on effectue la filtration sur filtre Büchner dont le verre fritté est recouvert d'un papier filtre Millipore (marque déposée) ayant une surface de 12,5 cm² et une porosité de 0,45 μm.

Ledit Büchner est relié à une trompe à eau par l'intermédiaire d'un tuyau sur lequel sont intercalés une pince de Mohr, une vanne d'entrée d'air et un manomètre.

Le protocole opératoire est le suivant:
— on met en route la trompe à eau tout en maintenant fermée la pince de Mohr
— quand on note sur le manomètre que l'équilibre de pression est atteint, on crée une dépression $\Delta P = 320$ mm de mercure $(0,42 - 10^5$ Pa) en agissant sur la vanne d'entrée d'air; la pince de Mohr obturant toujours le circuit
— on verse ensuite rapidement la solution du précurseur d'un dérivé oxygéné de terre rare sur le filtre et l'on enlève la pince de Mohr
— on mesure le temps d'écoulement de 100 cm³ de suspension.

On définit un indice de filtrabilité $I_F$ exprimé en cm³/h/cm² qui est l'expression chiffrée du comportement du précipité à la filtration.

On considère que le test est satisfaisant lorsque la valeur obtenue est au moins égal à 100.

Les exemples suivants illustrent l'obtention de précurseurs de dérivés oxygénés de néodyme, de samarium, de praséodyme et de cérium III.

*Example 1*

Dans un réacteur de deux litres à double enveloppe dans laquelle circule une eau thermostatée à 20°C et équipé d'un thermomètre, d'un système d'introduction des réactifs, d'un dispositif d'agitation (agitateur quadripales) on introduit simultanément à des débits respectifs de 1300 cm$^3$/h et de 800 cm$^3$/h

— une solution de nitrate de néodyme contenant 0,5 mole/litre de Nd$^{3+}$

— une solution d'ammoniaque 2 N

le rapport OH$^-$/Nd$^{3+}$ étant égal à 2,5.

La température du milieu réactionnel est de 20°C.

Le temps de séjour du mélange dans le milieu réactionnel est de 20 minutes.

La vitesse d'agitation est de 500 tours/minute.

Au bout de 20 minutes, on filtre la masse réactionnelle à température ambiante sur filtre Büchner selon le test précédemment décrit.

L'indice de filtration est de 1100 cm$^3$/h/cm$^2$.

On dose la quantité de néodyme restant dans les eaux-mères par complexation à l'aide d'une solution titrée du sel de sodium de l'acide éthylènediamine tétracétique ce qui permet de déterminer un rendement de précipitation de 100%.

On soumet ensuite le précipité obtenu à un séchage à l'étuve à une température de 50°C pendant 2 heures.

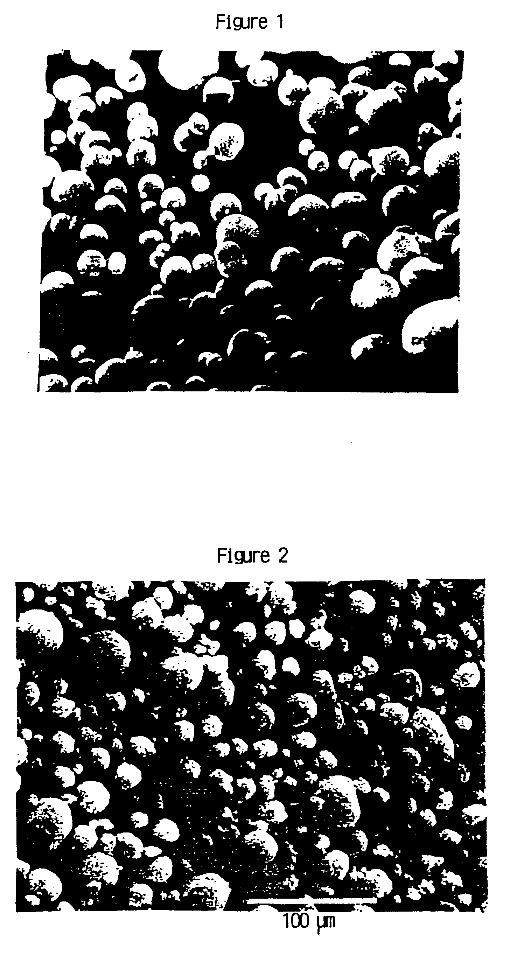

Le produit préparé selon l'invention présente une morphologie mise en évidence par la figure 1 qui représente une photographie prise au microscope à balayage électronique (G = 300) montrant des billes dont le diamètre apparent varie entre 5 et 50 μm.

L'analyse granulométrique réalisée par sédigraphie, donnée ci-après confirme le diamètre apparent:

| Diamètre des particules | % cumulés en poids |
|---|---|
| < 1 μm | 10 |
| < 5 μm | 13 |
| < 6 μm | 15 |
| < 8 μm | 25 |
| < 10 μm | 33 |
| < 15 μm | 61 |
| < 20 μm | 83 |
| < 30 μm | 96 |

— diamètre moyen: 13 μm

*Exemple 2*

Par rapport à l'exemple 1, on modifie le débit d'addition de la solution d'ammoniaque qui devient égal à 1300 cm$^3$/heure de telle sorte que le rapport OH$^-$/Nd$^{3+}$ soit égal à 4.

On obtient un indice de filtrabilité moins bon de 400 cm$^3$/h/cm$^2$ mais la filtration reste très satisfaisante.

*Exemple 3*

Dans cet ensemble, on montre l'influence de la concentration de la solution de nitrate de néodyme.

Les conditions opératoires de l'exemple 1 sont répétées à l'exception de la concentration de ladite solution qui est non pas de 0,5 mole mais de 1,4 mole/litre.

L'indice de filtrabilité est égal à 200 cm$^3$/h/cm$^2$.

*Exemple 4*

Cet exemple met en évidence l'influence du temps de séjour.

On reproduit l'exemple 1 à la différence près du temps de séjour qui est de 10 minutes.

Dans ce cas, on obtient un indice de filtrabilité de 700 cm$^3$/h/cm$^2$.

*Exemples 5 et 6*

On effectue la préparation du précurseur d'un dérivé oxygéné de néodyme selon les conditions décrites dans l'exemple 1 mais l'on change la température de réaction qui est de 30°C dans l'exemple 5 et 10°C dans l'exemple 6.

Les résultats obtenus sont consignés dans le tableau I. A titre de comparaison, on reporte l'indice de filtrabilité obtenu dans l'exemple 1.

TABLEAU I

| N° exemple | 1 | 5 | 6 |
|---|---|---|---|
| T° (C) | 20 | 30 | 10 |
| I$_F$ (cm$^3$/h/cm$^2$) | 1100 | 800 | 1000 |

*Exemples 7 et 8*

Ces deux exemples illustrent l'influence de la vitesse d'agitation du milieu réactionnel.

On opère comme dans l'exemple 1 sauf en ce qui concerne les vitesses d'agitation.

On rassemble les résultats obtenus dans le tableau II.

TABLEAU II

| N° exemple | 1 | 7 | 8 |
|---|---|---|---|
| vitesse d'agitation (tours/mn) | 500 | 100 | 800 |
| I$_F$ (cm$^3$/h/cm$^2$) | 1100 | 500 | 800 |

*Exemple 9*

On réalise la préparation d'un précurseur d'un dérivé oxygéné de samarium selon les conditions données dans l'exemple 1.

La filtration du précipité obtenu est très bonne puisque l'indice de filtrabilité est de 700 cm$^3$/h/cm$^2$.

La figure 2 représente une photographie prise au microscope électronique à balayage (C = 300) qui montre la morphologie du produit obtenu.

On remarque que les microbilles obtenues présentent un diamètre apparent variant de 10 à 40 μm.

*Exemple 10*

On illustre dans cet exemple la préparation d'un précurseur d'un dérivé oxygéné de praséodyme.

On procède comme dans l'exemple 1.

On obtient un indice de filtrabilité de 500 cm$^3$/h/cm$^2$.

Le produit obtenu a une morphologie semblable à celle représentée par la figure 2.

*Exemple 11*

On reproduit l'exemple 1 à la différence près que l'on met en œuvre une solution de nitrate céreux contenant 0,5 mole/litre de Ce$^{3+}$.

Le précipité obtenu filtre très bien puisque l'indice de filtrabilité obtenu est de 900 cm$^3$/h/cm$^2$.

La morphologie et les dimensions des particules du précurseur d'un dérivé oxygéné de cérium obtenu sont semblables à celles du produit de l'exemple 9.

*Exemple 12*

On prend 10 g du produit préparé à l'exemple 1.

On le dépose dans une nacelle que l'on place dans un four tubulaire. On effectue une montée en température de 9°C par minute jusqu'à 700°C, température que l'on maintient pendant 1 heure. On laisse refroidir à l'inertie du four.

On obtient 5,5 g d'un produit calciné de structure type Nd$_2$O$_3$ (ASTM 21-579) et qui se présente sous la forme de microbilles dont la taille varie entre 4 et 40 μm.

*Exemple 13*

Selon le mode opératoire de l'exemple 12, on calcine 10 g du précurseur du dérivé oxygéné de praséodyme préparé selon l'exemple 10.

On obtient un oxyde de praséodyme présentant des microbilles dont la taille s'échelonne entre 10 et 45 μm.

**Revendications**

1. Procédé d'obtention de précurseurs de dérivés oxygénés de terres rares caractérisé par le fait qu'il consiste:

— à mélanger simultanément et en continu une solution aqueuse d'au moins un sel de terre rare trivalente avec une base dans des conditions telles que le rapport molaire entre la concentration en ions OH$^-$ de la base et la concentration en sel de terre rare exprimée en cation terre rare soit constant et inférieur à 5,

— à séparer le précipité obtenu

— et éventuellement à le traiter thermiquement.

2. Procédé selon la revendication 1, caratérisé par le fait que le sel d'une terre rare trivalente est un nitrate de terre rare, un sel double de nitrates de terres rares et d'ammonium, un chlorure de terre rare.

3. Procédé selon l'une des revendications 1 et 2, caractérisé par le fait que la concentration de la solution d'un ou des sels de terres rares varie entre 0,1 et 2 moles par litre.

4. Procédé selon la revendiation 3, caractérisé par le fait que la concentration de la solution d'un ou des sels de terres rares est compris entre 0,3 et 1,5 mole par litre.

5. Procédé selon l'une des revendications 1 à 4, caractérisé par le fait que la base est choisie dans le groupe formé par l'ammoniaque, la soude, la potasse, le carbamate d'ammonium, l'urée, l'hexaméthylènetétramine et l'ammoniac.

6. Procédé selon l'une des revendications 1 à 5, caractérisé par le fait que la normalité de la solution basique varie entre 0,1 et 11 N.

7. Procédé selon la revendication 6, caractérisé par le fait que la normalité de la solution basique est comprise entre 2 et 11 N.

8. Procédé selon l'une des revendications 1 à 7, caractérisé par le fait que le rapport molaire [OH$^-$]/[TR$^{3+}$] est supérieur à 0,2 et inférieur à 5.

9. Procédé selon l'une des revendications 1 à 8, caractérisé par le fait que le rapport molaire [OH$^-$]/[TR$^{3+}$] est supérieur ou égal à 2 et inférieur à 5.

10. Procédé selon l'une des revendications 1 à 8, caractérisé par le fait que le rapport molaire [OH$^-$]/[TR$^{3+}$] est supérieur ou égal à 1 et inférieur ou égal à 3.

11. Procédé selon l'une des revendications 1 à 10, caractérisé par le fait que l'on fait le mélange simultané, sous agitation de la solution aqueuse d'au moins un sel de terre rare trivalente et de la solution basique.

12. Procédé selon la revendication 11, caractérisé par le fait que l'on contrôle le débit d'addition des réactifs de telle sorte que l'on obtienne le rapport molaire [OH$^-$]/[TR$^{3+}$] défini dans l'une des revendications 8 à 10.

13. Procédé selon la revendication 11, caractérisé par le fait que l'on contrôle le débit d'addition des réactifs en effectuant une régulation du pH entre 6,5 et 9,5.

14. Procédé selon l'une des revendications 1 à 13, caractérisé par le fait que la température du milieu réactionnel est choisie entre 10 et 50°C.

15. Procédé selon la revendication 14, caractérisé par le fait que la température du milieu réactionnel est comprise entre 10 et 30°C.

16. Procédé selon l'une des revendications 1 à 15, caractérisé par le fait que le temps de séjour du mélange dans le milieu réactionnel varie entre 1 minute et 48 heures.

17. Procédé selon la revendication 16, caractérisé par le fait que le temps de séjour du mélange dans le milieu réactionnel est compris entre 5 minutes et 30 minutes.

18. Procédé selon l'une des revendications 1 à 17, caractérisé par le fait que la vitesse d'agitation varie entre 200 et 1000 tours/minute.

19. Procédé selon l'une des revendications 1 à 18, caractérisé par le fait que la vitesse d'agitation est comprise entre 300 et 400 tours/minute.

20. Procédé selon l'une des revendications 1 à 19, caractérisé par le fait que l'on effectue la séparation du précipité par filtration ou par décantation.

21. Procédé selon l'une des revendications 1 à 20, caractérisé par le fait que l'on effectue un ou plusieurs lavages à l'eau ou à l'aide d'un solvant organique.

22. Procédé selon l'une des revendications 1 à 21, caractérisé par le fait que l'on effectue une étape de séchage à une température comprise entre la température ambiante et 200°C.

23. Procédé selon l'une des revendications 1 à 22, caractérisé par le fait que la durée du séchage varie entre 30 minutes et 48 heures.

24. Procédé selon la revendication 23, caractérisé par le fait que la durée du séchage est compris entre 2 heures et 8 heures,

25. Précurseurs de dérivés oxygénés de terres rares susceptibles d'être obtenus selon le procédé décrit dans l'une des revendications 1 à 24, caractérisé par le fait qu'ils se présentent sous forme d'agglomérats sphériques dont les dimensions s'échelonnent entre 2 et 100 μm.

26. Précurseur de dérivés oxygénés de terres rares selon la revendication 25, caractérisés par le fait qu'ils se présentent sous la forme de microbilles de diamètre moyen compris entre 50 et 60 μm.

27. Utilisation des précurseurs de dérivés oxygénés de terres rares décrits dans l'une des revendications 25 ou 26 comme intermédiaires de fabrication de dérivés oxygénés de terres rares.

28. Utilisation selon la revendication 27, caractérisé par le fait que les dérivés oxygénés de terres rares sont des oxydes de terres rares, des carbonates de terres rares.

29. Oxydes de terres rares obtenus par calcination des précurseurs de dérivés oxygénés de terres rares décrits dans l'une des revendications 25 ou 26, caractérisés en ce qu'ils se présentent sous forme de microbilles.

## Patentansprüche

1. Verfahren zur Herstellung von Vorläufern sauerstoffhaltiger Verbindungen der Seltenen Erden, dadurch gekennzeichnet, daß es darin besteht:
— gleichzeitig und kontinuierlich eine wäßrige Lösung wenigstens eines Salzes einer dreiwertigen Seltenen Erde mit einer Base zu mischen, unter solchen Bedingungen, daß das molare Verhältnis zwischen der Konzentration an $OH^-$-Ionen der Base und der Konzentration an dem Salz der Seltenen Erde ausgedrückt in Seltenerd-Kationen konstant und kleiner als 5 ist,
— den erhaltenen Niederschlag abzutrennen
— und gegebenenfalls diesen thermisch zu behandeln.

2. Verfahren nach Anspruch 1, dadurch gekennzeichnet, daß das Salz einer dreiwertigen Seltenen Erde ein Seltenerd-Nitrat, ein Doppelsalz von Nitraten einer Seltenen Erde und Ammonium oder ein Seltenerd-Chlorid ist.

3. Verfahren nach einem der Ansprüche 1 und 2, dadurch gekennzeichnet, daß die Konzentration der Lösung des einen oder der Seltenerd-Salze zwischen 0,1 und 2 Mol pro Liter variiert.

4. Verfahren nach Anspruch 3, dadurch gekennzeichnet, daß die Konzentration der Lösung des einen oder der Seltenerd-Salze zwischen 0,3 und 1,5 Mol pro Liter liegt.

5. Verfahren nach einem der Ansprüche 1 bis 4, dadurch gekennzeichner, daß die Base ausgewählt wird aus der Gruppe gebildet aus flüssigem Ammoniak, Soda, Pottasche, Ammoniumcarbamat, Harnstoff, Hexamethylentetramin und Ammoniak.

6. Verfahren nach einem der Ansprüche 1 bis 5, dadurch gekennzeichnet, daß die Normalität der basischen Lösung zwischen 0,1 und 11 N liegt.

7. Verfahren nach Anspruch 6, dadurch gekennzeichnet, daß die Normalität der basischen Lösung zwischen 2 und 11 N liegt.

8. Verfahren nach einem der Ansprüche 1 bis 7, dadurch gekennzeichnet, daß das molare Verhältnis $[OH^-]/[SE^{3+}]$ größer ist als 0,2 und kleiner als 5 ist.

9. Verfahren nach einem der Ansprüche 1 bis 8, dadurch gekennzeichnet, daß das molare Verhältnis $[OH^-]/[SE^{3+}]$ größer oder gleich 2 und kleiner als 5 ist.

10. Verfahren nach einem der Ansprüche 1 bis 8, dadurch gekennzeichnet, daß das molare Verhältnis $[OH^-]/[SE^{3+}]$ größer oder gleich 1 ist und kleiner oder gleich 3 ist.

11. Verfahren nach einem der Ansprüche 1 bis 10, dadurch gekennzeichnet, daß man eine gleichzeitige Mischung unter Rühren der wäßrigen Lösung wenigstens eines Salzes einer dreiwertigen Seltenen Erde und der basischen Lösung vornimmt.

12. Verfahren nach Anspruch 11, dadurch gekennzeichnet, daß man die Zugaberate der Reaktanden in der Weise kontrolliert, daß man ein molares Verhältnis $[OH^-]/[SE^{3+}]$ erhält, wie es in einem der Ansprüche 8 bis 10 definiert ist.

13. Verfahren nach Anspruch 11, dadurch gekennzeichnet, daß man die Zugaberate der Reaktanden kontrolliert, indem man eine pH-Regulierung auf zwischen 6,5 und 9,5 vornimmt.

14. Verfahren nach einem der Ansprüche 1 bis 12, dadurch gekennzeichnet, daß die Temperatur des Reaktionsmediums zwischen 10 und 50°C gewählt ist.

15. Verfahren nach Anspruch 14, dadurch gekennzeichnet, daß die Temperatur des Reaktionsmediums zwischen 10 und 30°C liegt.

16. Verfahren nach einem der Ansprüche 1 bis 15, dadurch gekennzeichnet, daß die Verweildauer des Gemisches in dem Reaktionsmedium zwischen 1 Minute und 48 Stunden liegt.

17. Verfahren nach Anspruch 16, dadurch gekennzeichnet, daß die Verweildauer der Mischung in dem Reaktionsmedium zwischen 5 Minutes und 30 Minuten liegt.

18. Verfahren nach einem der Ansprüche 1 bis 17, dadurch gekennzeichnet, daß die Rührgeschwindigkeit zwischen 200 und 1000 Umdrehungen/Minute liegt.

19. Verfahren nach einem der Ansprüche 1 bis 18, durch gekennzeichnet, daß die Rührgeschwindigkeit zwischen 300 und 400 Umdrehungen/Minute liegt.

20. Verfahren nach einem der Ansprüche 1 bis 19, dadurch gekennzeichnet, daß man eine Abtrennung des Niederschlags durch Filtration oder Dekantierung vornimmt.

21. Verfahren nach einem der Ansprüche 1 bis 20, dadurch gekennzeichnet, dass man einen oder mehrere Waschvorgänge mit Wasser oder mit Hilfe eines organischen Lösungsmittels vornimmt.

22. Verfahren nach einem der Ansprüche 1 bis 21, dadurch gekennzeichnet, daß man einen Trocknungsschritt bei einer Temperatur zwischen der Raumtemperatur und 200°C durchführt.

23. Verfahren nach einem der Ansprüche 1 bis 22, dadurch gekennzeichnet, daß die Dauer der Trocknung zwischen 30 Minuten und 48 Stunden liegt.

24. Verfahren nach Anspruch 23, dadurch gekennzeichnet, daß die Dauer der Trocknung zwischen 2 Stunden und 8 Stunden liegt.

25. Vorläufer sauerstoffhaltiger Verbindungen der Seltenen Erden, erhältlich in einem Verfahren gemäß einem der Ansprüche 1 bis 24, dadurch gekennzeichnet, daß sie in Form sphärischer Agglomerate vorliegen, deren Abmessungen zwischen 2 und 100 µm liegen.

26. Vorläufer sauerstoffhaltiger Verbindungen der Seltenen Erden gemäß Anspruch 25, dadurch gekennzeichnet, daß sie in Form von Mikrokugeln mit einem mittleren Durchmesser zwischen 50 und 60 µm vorliegen.

27. Verwendung von Vorläufer sauerstoffhaltiger Verbindungen der Seltenen Erden gemäß einem der Ansprüche 25 oder 26 als Zwischenprodukte bei der Herstellung sauerstoffhaltiger Verbindungen der Seltenen Erden.

28. Verwendung nach Anspruch 27, dadurch gekennzeichnet, daß die sauerstoffhaltigen Verbindungen der Seltenen Erden Seltenerdoxide oder Seltenerdcarbonate sind.

29. Oxide der Seltenen Erden erhalten durch Calcinierung der Vorläufer sauerstoffhaltiger Verbindungen der Seltenen Erden gemäß einem der Ansprüche 25 oder 26, dadurch gekennzeichnet, daß sie in Form von Mikrokugeln vorliegen.

**Claims**

1. Process for obtaining precursors of oxygen-containing derivatives of rare earths, characterized in that it consists in:
— simultaneously and continuously mixing an aqueous solution of at least one salt of a trivalent rare earth with a base under conditions such that the molar ratio of the concentration of OH⁻ ions of the base to the concentration of rare earth salt, expressed as rare earth cation, is constant and less than 5,
— separating off the precipitate obtained
— and, optionally, thermally treating the precipitate.

2. Process according to Claim 1, characterized in that the salt of a trivalent rare earth is a rare earth nitrate, a double salt of a rare earth nitrate and ammonium nitrate or a rare earth chloride.

3. Process according to either of Claims 1 and 2, characterized in that the concentration of the solution of one or more rare earth salts varies between 0.1 and 2 moles per litre.

4. Process according to Claim 3, characterized in that the concentration of the solution of one or more rare earth salts is between 0.3 and 1.5 moles per litre.

5. Process according to any of Claims 1 to 4, characterized in that the base is chosen from the group consisting of ammonia solution, sodium hydroxide, potassium hydroxide, ammonium carbamate, urea, hexamethylenetetramine and ammonia.

6. Process according to any of Claims 1 to 5, characterized in that the normality of the basic solution varies between 0.1 and 11 N.

7. Process according to Claim 6, characterized in that the normality of the basic solution is between 2 and 11 N.

8. Process according to any of Claims 1 to 7, characterized in that the molar ratio $[OH^-]/[RE^{3+}]$ is greater than 0.2 and less than 5.

9. Process according to any of Claims 1 to 8, characterized in that the molar ratio $[OH^-]/[RE^{3+}]$ is greater than or equal to 2 and less than 5.

10. Process according to any of Claims 1 to 8, characterized in that the molar ratio $[OH^-]/[RE^{3+}]$ is greater than or equal to 1 and less than or equal to 3.

11. Process according to any of Claims 1 to 10, characterized in that the aqueous solution of at least one salt of a trivalent rare earth and the basic solution are mixed simultaneously, with stirring.

12. Process according to Claim 11, characterized in that the rate of addition of the reactants is so controlled that the molar ratio $[OH^-]/[RE^{3+}]$ defined in any of Claims 8 to 10 is obtained.

13. Process according to Claim 11, characterized in that the rate of addition of the reactants is controlled by regulating the pH to between 6.5 and 9.5.

14. Process according to any of Claims 1 to 13, characterized in that the temperature of the reaction medium is chosen to be between 10 and 50°C.

15. Process according to Claim 14, characterized in that the temperature of the reaction medium is between 10 and 30°C.

16. Process according to any of Claims 1 to 15, characterized in that the residence time of the mixture in the raction medium varies between 1 minute and 48 hours.

17. Process according to Claim 16, characterized in that the residence time of the mixture in the reaction medium is between 5 minutes and 30 minutes.

18. Process according to any of Claims 1 to 17, characterized in that the speed of stirring varies between 200 and 1000 revolutions/minute.

19. Process according to any of Claims 1 to 18, characterized in that the speed of stirring is between 300 and 400 revolutions/minute.

20. Process according to any of Claims 1 to 19, characterized in that the precipitate is separated off by filtration or by decanting.

21. Process according to any of Claims 1 to 20, characterized in that one or more washes with water or with an organic solvent are carried out.

22. Process according to any of Claims 1 to 21, characterized in that a drying stage at a temperature between ambient temperature and 200°C is carried out.

23. Process according to any of Claims 1 to 22, characterized in that the drying time varies between 30 minutes and 48 hours.

24. Process according to Claim 23, characterized in that the drying time is between 2 hours and 8 hours.

25. Precursor of oxygen-containing derivatives of rare earths, which can be obtained in accordance with the process described in any of Claims 1 to 24, characterized in that they are in the form of spherical agglomerates, of dimensions ranging between 2 and 100 μm.

26. Precursors of oxygen-containing derivatives of rare earths according to Claim 25, characterized in that they are in the form of microspheres of mean diameter between 50 and 60 μm.

27. Use of the precursors of oxygen-containing derivatives of rare earths described in either of Claims 25 or 26 as intermediates in the manufacture of oxygen-containing derivatives of rare earths.

28. Use according to Claim 27, characterized in that the oxygen-containing derivatives of rare earths are oxides of rare earths or carbonates of rare earths.

29. Oxides of rare earths obtained by calcining the precursors of oxygen-containing derivatives of rare earths described in either of Claims 25 or 26, characterized in that they are in the form of microspheres.

Figure 1

Figure 2

100 µm